(19) Europäisches Patentamt
European Patent Office
Office européen des brevets

(11) EP 2 686 378 B1

(12) # EUROPEAN PATENT SPECIFICATION

(45) Date of publication and mention of the grant of the patent:
**22.04.2020 Bulletin 2020/17**

(21) Application number: **12710628.4**

(22) Date of filing: **14.03.2012**

(51) Int Cl.:
***C08K 5/00*** *(2006.01)*

(86) International application number:
**PCT/US2012/029010**

(87) International publication number:
**WO 2012/125686 (20.09.2012 Gazette 2012/38)**

(54) **ETHYLENE-BASED COMPOSITIONS**

ZUSAMMENSETZUNGEN AUF ETHYLENBASIS

COMPOSITIONS À BASE D'ÉTHYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.03.2011 US 201161452252 P**

(43) Date of publication of application:
**22.01.2014 Bulletin 2014/04**

(73) Proprietor: **Dow Global Technologies LLC**
**Midland, MI 48674 (US)**

(72) Inventors:
- **BAKER, Carl F.**
  **Lake Jackson**
  **TX 77566 (US)**
- **HO, Thoi H.**
  **Lake Jackson**
  **TX 77566 (US)**

(74) Representative: **Boult Wade Tennant LLP**
**Salisbury Square House**
**8 Salisbury Square**
**London EC4Y 8AP (GB)**

(56) References cited:
**WO-A2-2005/056657 WO-A2-2005/056657**

- **DATABASE WPI Week 200724 Thomson Scientific, London, GB; AN 2007-235356 XP002676061, & JP 2007 031699 A (BRIDGESTONE CORP) 8 February 2007 (2007-02-08)**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

**Description**

BACKGROUND

Pipes formed from polyethylene compositions are commonly used for the transportation of cold potable water. However, when potable water is heated, its disinfection agents (primarily chlorine) become more aggressive oxidation agents, and can react with the polyethylene resin used to form the pipe. The current approach is to use a crosslinked polyethylene in order to meet the overall requirement of the pipe application. These requirements include, among others, hydrostatic pressure capability, "burst test" performance, "excessive temperature and pressure test" performance, "chlorine resistance test" performance, ESCR, and low toxicology levels. However, crosslinked polyethylenes require extra, and typically costly, processing step(s), and such resins typically are not reprocessible due to their crosslinked nature. In addition, crosslinked polyethylene compositions are typically prone to additional side reactions that lead to taste and/or odor issues. There is a need for a non-crosslinked ethylene-based polymer compositions suitable for cold and hot potable water applications.

International Publication WO 2005/056657 discloses stabilized polyethylene materials with an antioxidant system, and which offer an advantageous balance of thermal, mechanical and processing properties, and which maintain physical properties in chlorinated water. Pipes formed from such materials show resistance to both chlorine and oxygen.

Other polymer compositions for pipe, film and/or other articles are disclosed in the following references: International Publication Nos. WO 2008/153586, WO 2008/051824, WO 2003/020821, WO 2008/141026, WO 2006/124226, WO; US Patent Nos. US 7250473, US 7086421; US Publication No. US 20080017268; Japanese Patent references JP2217682A (Abstract) and JP1030988A (Abstract), JP2007031699A (Abstract).

However, as discussed, there remains a need for improved non-crosslinked ethylene-based polymer compositions suitable for cold and hot potable water applications. These needs and others have been met by the following invention.

SUMMARY OF THE INVENTION

In the first aspect, the invention provides a composition comprising the following:

A) a non-crosslinked ethylene-based polymer;
B) a compound selected from Formula 1:

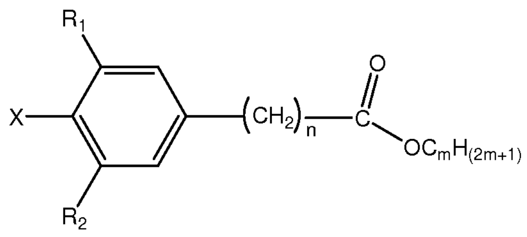

(Formula 1),

wherein R1 and R2 are each independently selected from a C1-C20 alkyl group,
X is OH,
n is from 1 to 10, and
m is from 10 to 30,

and wherein this compound is present in an amount greater than, or equal to, 500 ppm, based on the total weight of the composition;
C) a compound selected from Formula 2:

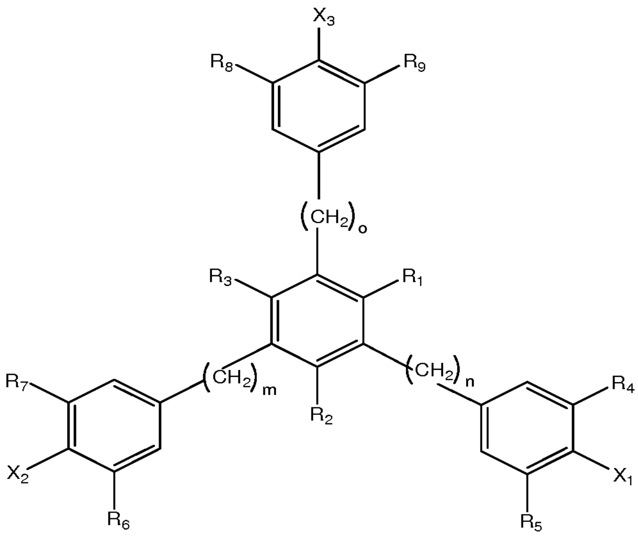 (Formula 2),

wherein R1, R2 and R3 are each independently selected from a C1-C20 alkyl group;
R4, R5, R6, R7, R8 and R9 are each independently selected from a C1-C20 alkyl group,
X1, X2 and X3 are each OH,
n is from 1 to 6,
m is from 1 to 6, and
o is from 1 to 6;

and wherein the weight ratio of component C to Component B (C/B) is greater than 1;
wherein the composition further comprises Component D selected from Formula 3:

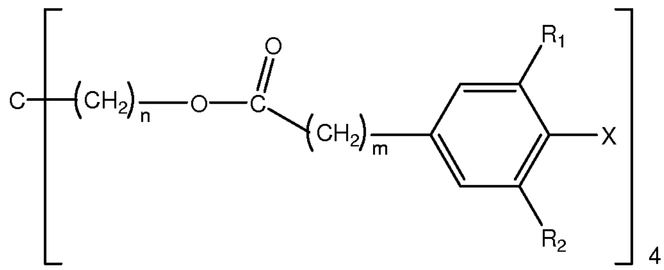 (Formula 3),

wherein R1 and R2 are each independently selected from a C1-C20 alkyl group, X is OH,
n is from 1 to 10, and
m is from 1 to 10;
wherein the weight ratio of Component D to Component B (D/B) is from 0.5 to 2.5; further comprising Component E selected from Formula 4:

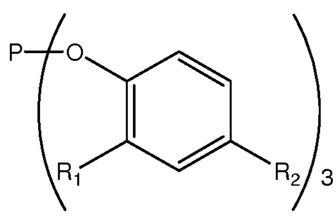 (Formula 4),

wherein R1 and R2 are each independently selected from a C1-C20 alkyl group, wherein the weight ratio of Component E to Component B (E/B) is from 0.5 to 2;
wherein the composition further comprises Component F selected from Formula 5:

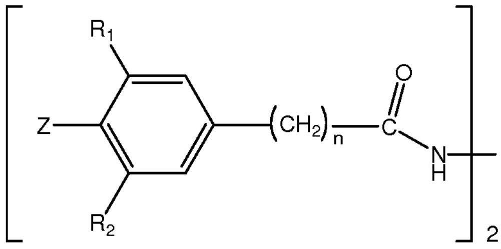

(Formula 5).

wherein R1 and R2 are each independently selected from a C1-C20 alkyl group;
Z is OH, and
n is from 1 to 10.

In a further aspect, the invention provides the article of claim 10.

BRIEF DESCRIPTION OF THE DRAWINGS

Figure 1 depicts calculated isotherms (stress versus time to failure) of pipes formed from Inventive Example 2, Inventive Example 3, and Comparative Example B. The "Log Failure Time" increases from left to right, and the "Log Stress" increases from bottom to top.

DETAILED DESCRIPTION

As discussed above, the invention provides a composition comprising the following:

A) a non-crosslinked ethylene-based polymer;
B) a compound selected from Formula 1:

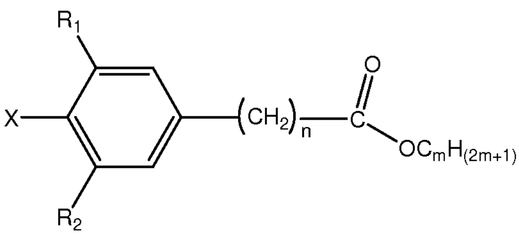

(Formula 1),

wherein R1 and R2 are each independently selected from a C1-C20 alkyl group, X is OH,
n is from 1 to 10, and
m is from 10 to 30,

and wherein this compound is present in an amount greater than, or equal to, 500 ppm, or greater than, or equal to, 750 ppm, greater than, or equal to, 900 ppm, based on the total weight of the composition;
C) a compound selected from Formula 2:

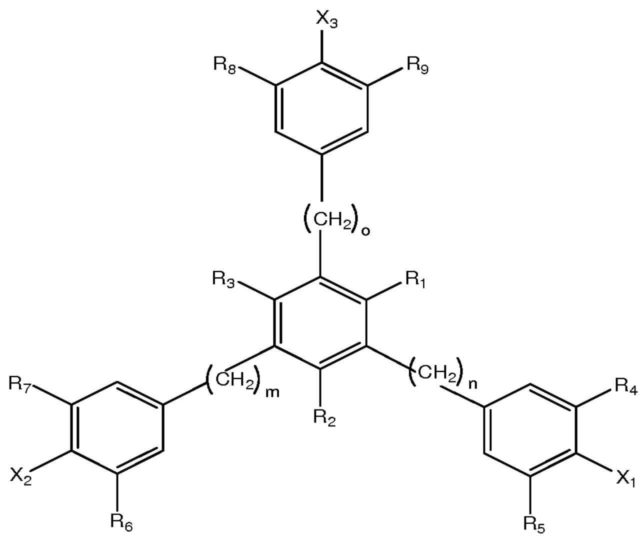

(Formula 2),

wherein R1, R2 and R3 are each independently selected from a C1-C20 alkyl group;
R4, R5, R6, R7, R8 and R9 are each independently selected from a C1-C20 alkyl group,
X1, X2 and X3 are each OH,
n is from 1 to 6,
m is from 1 to 6, and
o is from 1 to 6;

and wherein the weight ratio of Component C to Component B (C/B) is greater than 1;
wherein the composition further comprises Component D selected from Formula 3:

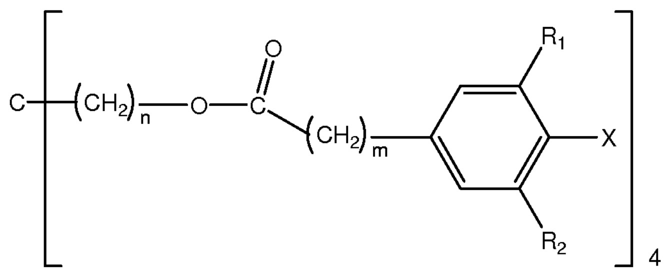

(Formula 3),

wherein R1 and R2 are each independently selected from a C1-C20 alkyl group, X is OH,
n is from 1 to 10, and
m is from 1 to 10;
wherein the weight ratio of Component D to Component B (D/B) is from 0.5 to 2.5;

further comprising Component E selected from Formula 4:

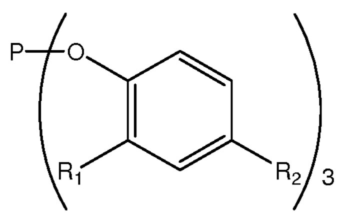

(Formula 4),

wherein R1 and R2 are each independently selected from a C1-C20 alkyl group,
wherein the weight ratio of Component E to Component B (E/B) is from 0.5 to 2;
wherein the composition further comprises Component F selected from Formula 5:

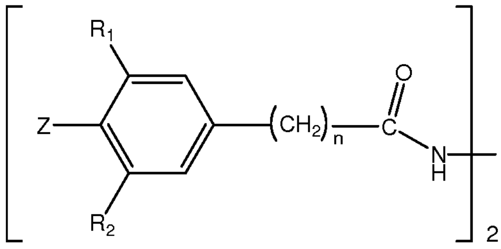

(Formula 5).

wherein R1 and R2 are each independently selected from a C1-C20 alkyl group;
Z is OH, and
n is from 1 to 10.

An inventive composition may comprise a combination of two or more embodiments as described herein.

In one embodiment, the weight ratio of C/B is from 1 to 6, or from 1.5 to 4, or from 2 to 3.

In one embodiment, Component B is present in an amount from 800 to 2500, or from 800 to 2000, or from 1000 to 1500 ppm, based on the weight of the composition.

In one embodiment, Component C is present in an amount from 1000 to 3000 ppm, or from 1500 to 2500, or from 2000 to 2300 ppm, based on the weight of the composition.

The composition further comprises Component D selected from Formula 3:

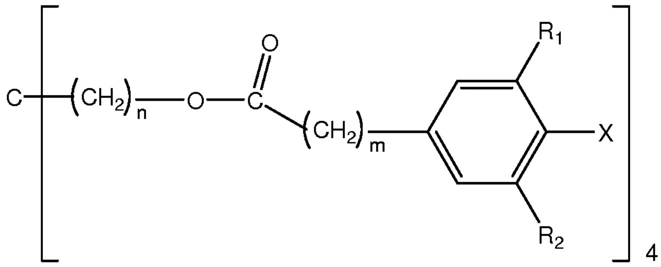

(Formula 3),

wherein R1 and R2 are each independently selected from a C1-C20 alkyl group, X is OH,
n is from 1 to 10, and
m is from 1 to 10.

The weight ratio of Component D to Component B (D/B) is from 0.5 to 2.5, or from 1 to 2.0, or from 1.3 to 1.6.

In one embodiment, Component D is present in an amount from 500 to 2500 ppm, based on the weight of the composition.

The composition further comprises Component E selected from Formula 4:

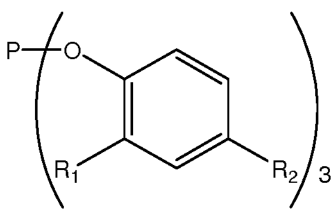

(Formula 4),

wherein R1 and R2 are each independently selected from a C1-C20 alkyl group.

The weight ratio of Component E to Component B (E/B) is from 0.5 to 2, or from 0.8 to 1.5, or from 0.9 to 1.3.

In one embodiment, Component E is present in an amount from 500 to 1500 ppm, based on the weight of the composition.

The composition further comprises Component F selected from Formula 5:

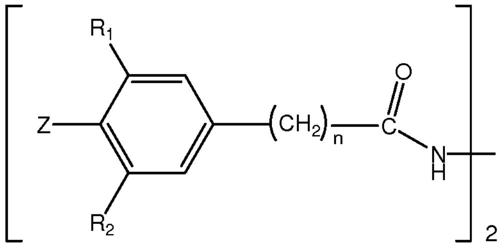

(Formula 5).

wherein R1 and R2 are each independently selected from a C1-C20 alkyl group;
Z is OH, and
n is from 1 to 10.

In one embodiment, the ethylene-based polymer has a density from 0.930 to 0.960 g/cc, or from 0.940 to 0.955 g/cc, or from 0.945 to 0.955 g/cc (1 cc = 1 $cm^3$).

In one embodiment, the ethylene-based polymer has a melt index (12) from 0.01 to 5 g/10 min, or 0.02 to 4 g/10 min.

In one embodiment, the ethylene-based polymer has a high load melt index ($I_{21}$) from 1 to 15 g/10 min, or from 2 to 12 g/10 min, or from 3 to 10 g/10 min.

In one embodiment, the ethylene-based polymer has a molecular weight distribution from 10 to 30, or from 12 to 28, or from 15 to 25, as determined by conventional GPC.

In one embodiment, the ethylene-based polymer has a molecular weight distribution from 15 to 20, as determined by conventional GPC.

In one embodiment, the ethylene-based polymer is a blend comprising at least two polymers.

In one embodiment, the ethylene-base polymer comprises an ethylene/α-olefin interpolymer, and preferably an ethylene/α-olefin copolymer. Suitable α-olefins include, for example, propylene, 1-butene, 1-hexene and 1-octene. In a further embodiment, the ethylene-based polymer further comprises a polyethylene homopolymer.

In one embodiment, the ethylene-based polymer is a multimoldal polymer.

In one embodiment, the ethylene-based polymer is a bimoldal polymer.

In one embodiment, the ethylene-based polymer is a unimoldal polymer.

An ethylene-based polymer may comprise two or more embodiments as described herein.

The invention also provides an article comprising at least one component formed from an inventive composition.

In one embodiment, the article is a pipe.

In one embodiment, the pipe is a monolayer pipe.

In one embodiment, the pipe is a multi-layer pipe.

In one embodiment, the pipe is used to transport and/or contain chlorinated water at a temperature of greater than, or equal to, 22.8 °C (73°F).

An inventive composition may comprise a combination of two or more embodiments as described herein.

An inventive article may comprise a combination of two or more embodiments as described herein.

An inventive pipe may comprise a combination of two or more embodiments as described herein.

**Antioxidants**

Antioxidants include the following Formulas 1-5. Formula 1 is shown below.

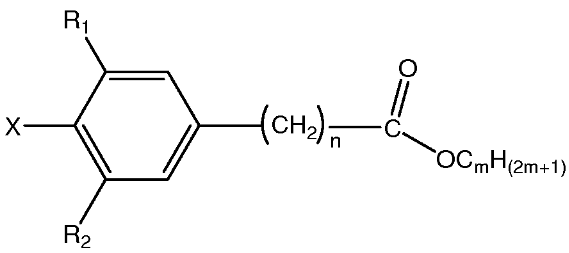

(Formula 1).

In Formula 1, R1 and R2 are each independently selected from a C1-C20 alkyl group;

X is OH,
n is from 1 to 10; and
m is from 10 to 30.

Examples of C1-C20 alkyls include methyl, ethyl, n-propyl, iso-propyl, n-butyl, sec-butyl, iso-butyl, tert-butyl, n-pentyl, neopentyl, n-hexyl, and cyclohexyl.

In one embodiment, in Formula 1, R1 and R2 are each independently a C1-C10 alkyl, a C1-C6 alkyl, a C1-C4 alkyl, a C2-C4 alkyl, or a C3-C4 alkyl. In a further embodiment, R1 and R2 are each independently a C4 alkyl.

In one embodiment, in Formula 1, R1 and R2 are each independently selected from n-butyl, sec-butyl, iso-butyl, tert-butyl. In a further embodiment, R1 and R2 are each tert-butyl.

In one embodiment, in Formula 1, R1 and R2 are the same alkyl substituent.

In one embodiment, in Formula 1, n is from 1-5. In a further embodiment, n is from 1 to 2. In a further embodiment, n is 2.

In one embodiment, in Formula 1, m is from 15-20. In a further embodiment, m is 18.

In one embodiment, Formula 1 is octadecyl-3-(3,5-di-tert-butyl-4-hydroxyphenyl)-propionate (CAS 002082-79-3), available as IRGANOX 1076.

A structure of Formula 1 may comprise a combination of two or more of the above embodiments.

Formula 2 is shown below.

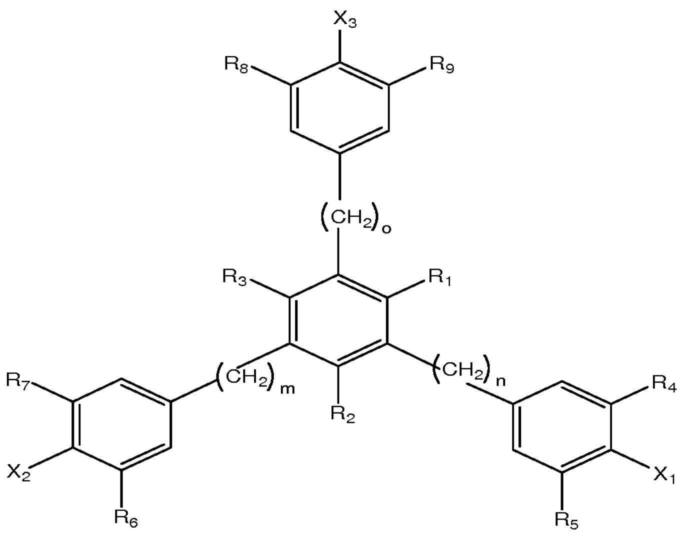

(Formula 2).

In Formula 2, R1, R2 and R3 are each independently selected from a C1-C20 alkyl group;
R4, R5, R6, R7, R8 and R9 are each independently selected from a C1-C20 alkyl group;
X1, X2 and X3 are each OH;
n is from 1 to 6;
m is from 1 to 6; and
o is from 1 to 6.

Examples of C1-C20 alkyls include methyl, ethyl, n-propyl, iso-propyl, n-butyl, sec-butyl, iso-butyl, tert-butyl, n-pentyl, neopentyl, n-hexyl, and cyclohexyl.

In one embodiment, in Formula 2, R1, R2 and R3 are each independently a C1-C10 alkyl, a C1-C5 alkyl, a C1-C3 alkyl, a C1-C3 alkyl, or a C1-C2 alkyl. In a further embodiment, R1, R2 and R3 are each independently a C1 alkyl.

In one embodiment, in Formula 2, R1, R2 and R3 are each independently selected from methyl or ethyl. In a further embodiment, R1, R2 and R3 are each methyl.

In one embodiment, in Formula 2, R1, R2 and R3 are the same alkyl substituent.

In one embodiment, in Formula 2, R4, R5, R6, R7, R8 and R9 are each independently selected from a C1-C10 alkyl, a C1-C6 alkyl, a C1-C4 alkyl, a C2-C4 alkyl, or a C3-C4 alkyl. In a further embodiment, R4, R5, R6, R7, R8 and R9 are each independently a C4 alkyl.

In one embodiment, in Formula 2, R4, R5, R6, R7, R8 and R9 are each independently selected from n-butyl, sec-butyl, iso-butyl, tert-butyl. In a further embodiment, R4, R5, R6, R7, R8 and R9 are each tert-butyl.

In one embodiment, in Formula 2, R4, R5, R6, R7, R8 and R9 are the same alkyl substituent.

In one embodiment, in Formula 2, n is from 1-4. In a further embodiment, n is from 1 to 2. In a further embodiment, n is 1.

In one embodiment, in Formula 2, m is from 1-4. In a further embodiment, m is from 1 to 2. In a further embodiment, m is 1.

In one embodiment, in Formula 2, o is from 1-4. In a further embodiment, o is from 1 to 2. In a further embodiment, o is 1.

In one embodiment, in Formula 2, m = n =o.

In one embodiment, Formula 2 is 1,3,5-trimethyl-2,4,6-tris(3,5-di-t-butyl-4-hydroxybenzyl)benzene (IRGANOX 1330).

A structure of Formula 2 may comprise a combination of two or more of the above embodiments.

Formula 3 is shown below.

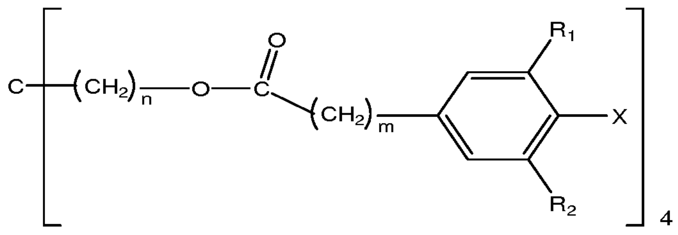

(Formula 3).

In Formula 3, R1 and R2 are each independently selected from a C1-C20 alkyl group;
X is OH;
n is from 1 to 10; and
m is from 1 to 10.

Examples of C1-C20 alkyls include methyl, ethyl, n-propyl, iso-propyl, n-butyl, sec-butyl, iso-butyl, tert-butyl, n-pentyl, neopentyl, n-hexyl, and cyclohexyl.

In one embodiment, in Formula 3, R1 and R2 are each independently a C1-C10 alkyl, a C1-C6 alkyl, a C1-C4 alkyl, a C2-C4 alkyl, OR A C3-C4 alkyl. In a further embodiment, R1 and R2 are each independently a C4 alkyl.

In one embodiment, in Formula 3, R1 and R2 are each independently selected from n-butyl, sec-butyl, iso-butyl, tert-butyl. In a further embodiment, R1 and R2 are each tert-butyl.

In one embodiment, in Formula 3, R1 and R2 are the same alkyl substituent.

In one embodiment, in Formula 3, n is from 1-6. In a further embodiment, n is from 1 to 4. In a further embodiment, n is from 1 to 2. In a further embodiment, n is 1.

In one embodiment, in Formula 3, m is from 1-6. In a further embodiment, m is from 1 to 4. In a further embodiment, m is from 1 to 2. In a further embodiment, m is 2.

In one embodiment, Formula 3 is IRGANOX 1010. Pentaerythritol Tetrakis(3-(3,5-di-tert-butyl-4-hydroxyphenyl)propionate) (CAS 6683-19-8) available as IRGANOX 1010 (Ciba Specialty Chemicals).

A structure of Formula 3 may comprise a combination of two or more of the above embodiments.

Formula 4 is shown below.

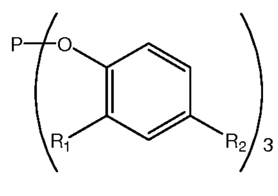

(Formula 4).

In Formula 4, R1 and R2 are each independently selected from a C1-C20 alkyl group.

Examples of C1-C20 alkyls include methyl, ethyl, n-propyl, iso-propyl, n-butyl, sec-butyl, iso-butyl, tert-butyl, n-pentyl, neopentyl, n-hexyl, and cyclohexyl.

In one embodiment, in Formula 4, R1 and R2 are each independently a C1-C10 alkyl, a C1-C6 alkyl, a C1-C4 alkyl, a C2-C4 alkyl, or a C3-C4 alkyl. In a further embodiment, R1 and R2 are each independently a C4 alkyl.

In one embodiment, in Formula 4, R1 and R2 are each independently selected from n-butyl, sec-butyl, iso-butyl, tert-butyl. In a further embodiment, R1 and R2 are each tert-butyl.

In one embodiment, in Formula 4, R1 and R2 are the same alkyl substituent.

In one embodiment, Formula 4 is tris-(2,4-di-tert-butylphenyl)phosphate (CAS 31570-04-4) available as IRGAFOS 168.

A structure of Formula 4 may comprise a combination of two or more of the above embodiments.

Formula 5 is shown below.

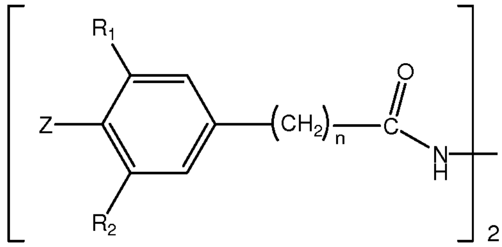

(Formula 5).

In Formula 5, R1 and R2 are each independently selected from a C1-C20 alkyl group;
Z is OH; and
n is from 1 to 10.

Examples of C1-C20 alkyls include methyl, ethyl, n-propyl, iso-propyl, n-butyl, sec-butyl, iso-butyl, tert-butyl, n-pentyl, neopentyl, n-hexyl, and cyclohexyl.

In one embodiment, in Formula 5, R1 and R2 are each independently a C1-C10 alkyl, a C1-C6 alkyl, a C1-C4 alkyl, a C2-C4 alkyl, or a C3-C4 alkyl. In a further embodiment, R1 and R2 are each independently a C4 alkyl.

In one embodiment, in Formula 5, R1 and R2 are each independently selected from n-butyl, sec-butyl, iso-butyl, tert-butyl. In a further embodiment, R1 and R2 are each tert-butyl.

In one embodiment, in Formula 5, R1 and R2 are the same alkyl substituent.

In one embodiment, in Formula 5, n is from 1-5. In a further embodiment, n is from 1 to 2. In a further embodiment, n is 2.

In one embodiment, Formula 5 is IRGANOX MD-1024. 2',3-bis[[3-[3,5-di-tert-butyl-4-hydroxyphenyl]propionyl]]propionohydrazide. (CAS 32687-78-8) available as IRGANOX MD 1024.

A structure of Formula 5 may comprise a combination of two or more of the above embodiments.

Additional antioxidants include 1,3,5-tris(3,5-di-tert-butyl-4-hydroxybenzyl)-1,3,5-triazine-2,4,6(1H,3H,5H)-trione (CAS 2767-62-6) available as IRGANOX 3114; 1,3,5-TRIS(4-tert-butyl-3-hydroxy-2,6-dimethyl benzyl)-1,3,5-triazine-2,4,6-(1H,3H,5H)-trione (CAS 040601-76) available as CYANOX 1790 (CyTech Industries); Ethylenebis(oxyethylene)bis-(3-(5-tert-butyl-4-hydroxy-m-tolyl)-propionate) (CAS 36443-68-2) available as IRGANOX 245; 1,6-hexamethylene bis (3,5-di(tert)-butyl-4-hydroxyhydrocinnamate (CAS 35074-77-2) available as IRGANOX 259; thiodiethylene bis[3-(3,5-di-tert-butyl-4-hydroxyphenyl) propionate] (CAS 41484-35-9) available as IRGANOX 1035; DOVERFOS 9228; 2,2'-oxalyldiamidobis[ethyl 3-(3,5-di-t-butyl-4-hydroxyphenyl) propionate] (available as Naugard™ XL1); and mixtures thereof.

Processing aids, UV stabilizers, other antioxidants, pigments or colorants, can also be advantageously used with the compositions of the present invention.

**Applications**

The invention also provides an article comprising at least one component formed from an inventive composition. An article can be obtained by suitable known conversion techniques, applying heat, pressure or a combination thereof, to obtain the shaped article. Suitable conversion techniques include, for example, blow-molding, co-extrusion blow-molding, injection molding, injection stretch blow molding, compression molding, extrusion, pultrusion, calendering and thermoforming. Articles include films, sheets, fibers, profiles, moldings and pipes.

The inventive compositions are particularly suitable for durable applications, especially pipes - without the need for cross-linking. Pipes comprising at least one component (for example, a pipe layer) formed from an inventive composition are another aspect of the present invention. Pipes include monolayer pipes as well as multilayer pipes, including multilayer composite pipes. Monolayer pipes consist of one pipe layer made from an inventive composition. Multilayer composite pipes comprise two or more pipe layers, wherein at least one pipe layer is formed from an inventive composition. Examples of multilayer pipes include three-layer composite pipes with the general structure PE/Adhesive/Barrier, or five-layer pipes with the general structure PE/Adhesive/Barrier/Adhesive/PE or Polyolefin/Adhesive/Barrier/Adhesive/PE. In these structures at least one PE layer is formed from an inventive composition. Suitable polyolefins (or olefin-based polymers) include, for example, high density ethylene-based polymers (e.g., homopolymers and interpolymers), propylene-based polymers (e.g., homopolymers and interpolymers) and butylene-based polymers (homopolymers and

interpolymers). The barrier layer may be an organic polymer capable of providing the desired barrier properties, such as an ethylene-vinyl alcohol copolymer (EVOH), or a metal, for example, aluminum or stainless steel.

DEFINITIONS

The term "composition," as used herein, includes a mixture of materials which comprise the composition, as well as reaction products and decomposition products formed from the materials of the composition.

The term "polymer," as used herein, refers to a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure), and the term interpolymer as defined hereinafter.

The term "interpolymer," as used herein, refers to polymers prepared by the polymerization of at least two different types of monomers. The generic term interpolymer thus includes copolymers (employed to refer to polymers prepared from two different types of monomers), and polymers prepared from more than two different types of monomers.

The term, "olefin-based polymer," as used herein, refers to a polymer that comprises, in polymerized form, a majority amount of olefin monomer, for example ethylene or propylene (based on the weight of the polymer), and optionally may comprise one or more comonomers.

The term, "ethylene-based polymer," as used herein, refers to a polymer that comprises, in polymerized form, a majority amount of ethylene monomer (based on the weight of the polymer), and optionally may comprise one or more comonomers.

The term, "ethylene/$\alpha$-olefin interpolymer," as used herein, refers to an interpolymer that comprises, in polymerized form, a majority amount of ethylene monomer (based on the weight of the interpolymer), and at least one $\alpha$-olefin.

The term, "ethylene/$\alpha$-olefin copolymer," as used herein, refers to a copolymer that comprises, in polymerized form, a majority amount of ethylene monomer (based on the weight of the copolymer), and an $\alpha$-olefin, as the only two monomer types.

The term, "propylene-based polymer," as used herein, refers to a polymer that comprises, in polymerized form, a majority amount of propylene monomer (based on the weight of the polymer), and optionally may comprise one or more comonomers.

The term "melt processing" is used to mean any process in which the polymer is softened or melted, such as extrusion, pelletizing, film blowing and casting, thermoforming and compounding in polymer melt form.

The terms "blend" or "polymer blend," as used herein, mean a blend of two or more polymers. Such a blend may or may not be miscible. Such a blend may or may not be phase separated. Such a blend may or may not contain one or more domain configurations, as determined from transmission electron microscopy, light scattering, x-ray scattering, and other methods known in the art.

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of' excludes from the scope of any succeeding recitation any other component, step or procedure, excepting those that are not essential to operability. The term "consisting of' excludes any component, step or procedure not specifically delineated or listed.

Test Methods

Resin density was measured by the Archimedes displacement method, ASTM D 792-00, Method B, in isopropanol. Specimens were measured within one hour of molding, after conditioning in the isopropanol bath at 23°C for eight minutes to achieve thermal equilibrium prior to measurement. The specimens were compression molded according to ASTM D-4703-00, Annex A, with a five minutes initial heating period at about 190°C, and a 15°C/min cooling rate per Procedure C. Each specimen was cooled to 45°C in the press, with continued cooling until "cool to the touch."

Melt index measurements were performed according to ASTM D-1238-04, Condition 190°C/2.16 kg and Condition 190°C/21.6 kg, which are known as $I_2$ and $I_{21}$, respectively.

***Gel Permeation Chromatography (GPC)***

Polymer molecular weight was characterized by high temperature triple detector gel permeation chromatography (3D-GPC). The chromatographic system consisted of a Waters (Millford, MA) "150°C high temperature" chromatograph, equipped with a Precision Detectors (Amherst, MA) 2-angle laser light scattering detector, Model 2040, and a 4-capillary differential viscometer detector, Model 150R, from VISCOTEK (Houston, TX). The 15° angle of the light scattering

detector was used for calculation purposes. Concentration was measured via an infra-red detector (IR4) from Polymer-Char, Valencia, Spain.

Data collection was performed using Viscotek TriSEC software version 3 and a 4-channel VISCOTEK Data Manager DM400. The system was equipped with an on-line solvent degas device from Polymer Laboratories. The carousel compartment was operated at 150°C, and the column compartment was operated at 150°C. The columns were four POLYMER LAB Mix-A 30 cm, 20 micron columns. The polymer solutions can be prepared in either 1,2,4 trichlorobenzene (TCB) or decahydronapthalene (decalin). Each sample was prepared in decalin. Each sample was prepared at a concentration of 0.1 grams of polymer in 50 ml of solvent. The chromatographic solvent and the sample preparation solvent contained 200 ppm of butylated hydroxytoluene (BHT). Both solvent sources were nitrogen sparged. Polyethylene samples were stirred gently at 160°C for four hours. The injection volume was 200 μl, and the flow rate was 1.0 ml/minute.

Calibration of the GPC column set was performed with 21 narrow molecular weight distribution polystyrene standards. The molecular weights of the standards ranged from 580 to 8,400,000, and were arranged in 6 "cocktail" mixtures, with at least a decade of separation between individual molecular weights.

The polystyrene standard peak molecular weights were converted to polyethylene molecular weights using the following equation (as described in Williams and Ward, J. Polym. Sci., Polym. Let., 6, 621 (1968)):

$$\text{Mpolyethylene} = \text{A x (Mpolystyrene)}^{\text{B}} \quad (1\text{A}),$$

where M is the molecular weight, A has a value of 0.39 and B is equal to 1.0.

A fifth order polynomial was used to fit the respective polyethylene-equivalent calibration points.

The total plate count of the GPC column set was performed with Eicosane (prepared at "0.04 g in 50 milliliters of TCB," and dissolved for 20 minutes with gentle agitation.) The plate count and symmetry were measured on a 200 microliter injection according to the following equations:

$$\text{PlateCount} = 5.54 * (\text{RV at Peak Maximum / (Peak width at ½ height)) ^ 2} \quad (2\text{A}),$$

where RV is the retention volume in milliliters, and the peak width is in milliliters.

$$\text{Symmetry} = (\text{Rear peak width at one tenth height - RV at Peak maximum) / (RV at Peak Maximum - Front peak width at one tenth height}) \quad (3\text{A}),$$

where RV is the retention volume in milliliters, and the peak width is in milliliters.

The Systematic Approach for the determination of multi-detector offsets was done in a manner consistent with that published by Balke, Mourey, et. Al (Mourey and Balke, Chromatography Polym. Chpt 12, (1992)) (Balke, Thitiratsakul, Lew, Cheung, Mourey, Chromatography Polym. Chpt 13, (1992)), optimizing dual detector log molecular weight results from a linear polyethylene homopoymer of 115,000 g/mole (Mw), to the narrow standard column calibration results from the narrow standards calibration curve using in-house software. The molecular weight data for off-set determination was obtained in a manner consistent with that published by Zimm (Zimm, B.H., J.Chem. Phys., 16, 1099 (1948)) and Kratochvil (Kratochvil, P., Classical Light Scattering from Polymer Solutions, Elsevier, Oxford, NY (1987)). The overall injected concentration, used for the determination of the molecular weight, was obtained from the sample infra-red area, and the infra-red detector calibration from the linear polyethylene homopolymer of 115,000 g/mole molecular weight. The chromatographic concentrations were assumed low enough to eliminate addressing 2nd Virial coefficient effects (concentration effects on molecular weight).

The calculations of Mn, Mw, and Mz based on conventional GPC results using the IR4 detector were determined from the following equations:

$$\overline{Mn} = \frac{\sum^{i} IR_i}{\sum^{i} \left( IR_i \middle/ M_{calibration_i} \right)} \quad (4\text{A}),$$

$$\overline{Mw} = \frac{\sum^{i}(IR_i * Mcal_i)}{\sum^{i} IR_i} \quad (5A),$$

$$\overline{Mz} = \frac{\sum^{i}\left(IR_i * Mcal^2{}_i\right)}{\sum^{i}(IR_i * Mcal_i)} \quad (6A),$$

where, equations 4A, 5A, and 6A are calculated from polymers prepared in solutions of decalin.

In addition to the above calculations, a set of alternative Mw, Mz and $M_{Z+1}$ [Mw (abs), Mz (abs), Mz (BB) and $M_{Z+1}$ (BB)] values were also calculated with the method proposed by Yau and Gillespie, Polymer, 42, 8947-8958 (2001), and determined from the following equations:

$$\overline{Mw}(abs) = K_{LS} * \frac{\sum^{i}(LS_i)}{\sum^{i}(IR_i)} \quad (8A),$$

where, $K_{LS}$ = LS-MW calibration constant.

$$\overline{Mz}(abs) = \frac{\sum^{i} IR_i * (LS_i / IR_i)^2}{\sum^{i} IR_i * (LS_i / IR_i)} \quad (9A),$$

$$\overline{Mz}(BB) = \frac{\sum^{i}(LS_i * Mcalibration_i)}{\sum^{i}(LS_i)} \quad (10A),$$

$$\overline{M_{Z+1}}(BB) = \frac{\sum^{i}(LS_i * Mcalibration_i^2)}{\sum^{i}(LS_i * Mcalibration_i)} \quad (11A),$$

where $LS_i$ is the 15 degree LS signal, and the Mcalibration uses equation 1A, and the LS detector alignment is as described previously.

In order to monitor the deviations over time, which may contain an elution component (caused by chromatographic changes) and a flow rate component (caused by pump changes), a late eluting narrow peak is generally used as a "flow rate marker peak." A flow rate marker was therefore established based on decane flow marker dissolved in the eluting sample prepared in TCB. This flow rate marker was used to linearly correct the flow rate for all samples by alignment of the decane peaks. Any changes in the time of the marker peak are then assumed to be related to a linear shift in both flow rate and chromatographic slope. The flow characteristics of the linear reference 38-4 prepared in TCB with decalin as the flow rate marker was used as the same flow characteristics for solution samples prepared in decalin run on the same carousal.

The preferred column set is of 20 micron particle size and "mixed" porosity to adequately separate the highest molecular weight fractions appropriate to the claims.

The plate count for the chromatographic system (based on eicosane as discussed previously) should be greater than 22,000, and symmetry should be between 1.00 and 1.12.

The invention is further illustrated by the following Examples, which, however, shall not be construed as a limitation of the invention.

EXAMPLES

Ethylene-based polymer (E90): density 0.949 g/cc, 12 of 0.08 g/10 min, 121 of 7.0 g/10 min. E90 is a bimodal ethylene/1-hexene copolymer with a MWD (Mw/Mn) of 16-17, as determined by conventional GPC.
Comparative Composition A: E90 plus 1160 ppm IRGAFOS 168 (1-168) and 1160 ppm IRGANOX 1010 (I-1010).
Inventive Composition 1: E90 plus 1160 ppm IRGAFOS 168 (1-168), 2200 ppm IRGANOX 1330 (1-1330), 1760 ppm IRGANOX 1010 (I-1010), 1000 ppm IRGANOX 1076 (1-1076), and 1000 ppm IRGANOX 1024 MD (MD-1024).
The above compositions were each prepared by melt mixing the additives (in each "ppm amount" specified above; each "ppm amount" based on the total weight of composition) and E90, and pelletizing the final composition. Each composition was extruded into a pipe (1.27 cm (half-inch) CTS pipe).

*Pipe Extrusion*

Pipe was extruded on an AMERICAN MAPLAN (60 mm barrel, 30/1 L/D) extrusion line, equipped with a pipe die for the manufacture of nominally "1.27 cm (½ inch) CTS (copper tube size), SDR 9 pipe." The resin (E90 plus additives) was extruded to produce natural pipe.
The pipe extruder temperature profile and process conditions are shown below. A vacuum sizing method was employed to dimensionally size the pipe. An additional cooling water tank was employed to completely solidify the pipe. The cooling water temperature was approximately 55-60°F. A variable speed puller was run under constant speed conditions for the pipe size produced.
The pipe extrusion conditions were as follows.

| | |
|---|---|
| Barrel Temperature: | 204°C (400°F) |
| Die Temperature: | 210°C (410°F) |
| Melt Temperature: | 204°C (400°F) |
| Amp Load: | 65% |
| Head Pressure: | 17.1 MPa (2480 psi) |
| Output Rate: | 133 kg/hr (294 lbs/hr) |
| Pipe Size*: | 1.27 cm (½" inch) CTS |
| Pipe Dimension Ratio: | SDR 9 |

*Average OD of 15.9 mm (0.625 inch) and average wall thickness 1.9 mm (0.075 inch).

The comparative composition and the inventive composition were tested for oxidative attack by chlorinated water according to ASTM F2023-00. Data from this test was used to classify the performance of the compositions with respect to oxidative attack in chlorinated, hot water, according to ASTM F2769-09. Table 1 summarized the results.

Table 1: Compositions

| Material | Chlorine Performance Level ASTM F2769 |
|---|---|
| Comparative Composition A | < Level 1 |
| Inventive Composition 1 | Level 5 |

ASTM F2769 defines chlorine resistance levels for a "50 year" design life as follows:

Level 1 - Water temperature is 60°C (140°F), 25% of the time; and 22.8°C (73°F), 75% of the time,

Level 3 - Water temperature is 60°C (140°F), 50% of the time; and 22.8°C (73°F), 50% of the time, and

Level 5 - Water temperature is 60°C (140°F), 100% of the time; and 22.8°C (73°F), 0% of the time.

A "Level 5" rating is roughly four times more resistant to chlorine than a "Level 1" rating. Thus, the pipe formed from Inventive Composition 1 is significantly more resistant to oxidation reactions from chlorinated water, as compared to the pipe made from Comparative Composition A.

*Additional Studies*

Additional compositions for pipe are shown below in Table 2. The polymer used in each composition was E90, as discussed above. Each ppm amount was based on the total weight of composition.

Table 2; Additional Compositions

| Ex. | Cmpnd 1 (Form. 1) I-1076 (ppm) | Cmpnd 2 (Form. 2) I-1330 (ppm) | Cmpnd 3 (Form. 3) I-1010 (ppm) | Cmpnd 4 (Form. 4) I-168 (ppm) | Cmpnd 5 (Form. 5) MD-1024 (ppm) |
|---|---|---|---|---|---|
| Inv.2 | 1000 | 4000 | 1174 | 1174 | 1000 |
| Inv.3 | 1000 | 10000 | 1174 | 1174 | 1000 |
| Comp. B | 1000 | 500 | 1174 | 1174 | 1000 |

The compositions in Table 2 were formed into "1.27 cm (½") CTS SDR 9 Natural PE-RT" pipes, as discussed above. The OIT (Oxidative Induction Time) and the extrapolated design life (60°C, 552 kPa (80 psig)) of the pipe samples, as determined from chlorine resistance testing, were examined.

Workmanship of each pipe (2 pipes per composition) was inspected in accordance with ASTM F2769-10, Section 6.1. Dimensions and Tolerances of each pipe were inspected in accordance with ASTM F2769-10, Section 6.2 and ASTM D2122-98 (reaffirmed in 2010). The pipe samples met the Workmanship and the Dimensions and Tolerances requirements of ASTM F2769-10. Results are shown in Table 3.

Table 3: Summary of Workmanship, Dimensions and Tolerances

| Test | Requirement | Sample | Result |
|---|---|---|---|
| Workmanship | The tubing shall be homogeneous throughout & free of visible cracks, holes, foreign inclusions or other defects; uniform in color & opacity | Comp. B | Met requirements |
| | | Inv. 2 | Met requirements |
| | | Inv. 3 | Met requirements |
| Dimensions and Tolerances | Average OD: 1.58 cm (0.621")-1.60 cm (0.629")<br>Wall Thickness: 1.78 cm (0.070") - 2.03mm (0.080") | Comp. B | Met requirements<br>OD: 1.59 cm (0.627")<br>WT: 1.91 mm (0.075") |
| | | Inv. 2 | Met requirements<br>OD: 1.58 cm (0.624")<br>WT: 1.93 mm (0.076") |
| | | Inv. 3 | Met requirements<br>OD: 1.60 cm (0.628")<br>WT: 1.88 mm (0.074") |

The Oxidative-Induction Time (OIT) of the pipes was measured in accordance with ASTM D3895-07 at 200°C. Sample disks were cut from the pipe samples. The sample discs, measuring approximately "6.3 mm in diameter" and "0.25 mm in nominal thickness," were sectioned from slices cut from the inner surface and mid-wall of each pipe. Testing was performed in replicate. The OIT results are shown in Table 4.

Table 4: OIT Results

| Sample | Location | OIT (min) | | |
|---|---|---|---|---|
| | | Replicate | Average (one pipe tested; n=2*) | Standard Deviation |
| Comp. B | Inner Wall | 150 | 147 | 3 |
| | | 145 | | |
| | Mid-Wall | 144 | 145 | 2 |
| | | 147 | | |
| Inv. 2 | Inner Wall | 168 | 166 | 3 |
| | | 164 | | |
| | Mid-Wall | 166 | 166 | 0.1 |
| | | 166 | | |
| Inv. 3 | Inner Wall | 190 | 190 | 1 |
| | | 189 | | |
| | Mid-Wall | 199 | 197 | 2 |
| | | 196 | | |
| *Two measurements were made using the same pipe sample. | | | | |

Chlorine Resistance Testing was performed in accordance with ASTM F2023-10 *Standard Test Method for Evaluating the Oxidative Resistance of Crosslinked Polyethylene (PEX) Tubing and Systems to Hot Chlorinated Water.* Testing was performed at a single test condition of 110°C/482.6 kPa (70 psig). Chlorine resistance testing was conducted in an accelerated pipe testing facility. Specimens were exposed to a continuous flowing, chlorinated, reverse osmosis water, and tested under conditions as detailed below in Table 5A. Chlorine gas was used as the chlorine source. Specimens were tested as "38.1 cm (15") lengths" with standard ASTM F1807 brass insert crimp fittings on both pipe ends. The length to diameter ratio was nominally 24. Table 5B lists the specimen details. The specimen position was horizontal. The chlorine resistance results are shown in Table 6.

Table 5A: Primary Test Variables and Control Limits

| Parameter | Nominal | Control Limits |
|---|---|---|
| pH | 6.8 | ± 0.2 |
| Chlorine (mg/L) | 4.4 | ± 0.2 |
| ORP (mV) | > 825 | Measured |
| Fluid Temperature (°C)* | 110 | ± 1 |
| Air Temperature (°C)* | 110 | ± 1 |
| Fluid Pressure (kPa) ((psig)) | 482.6 (70) | ± 3 |
| Flow Rate (USGPM) | 0.1 | ± 10% |
| * The Fluid and Air Temperatures were controlled at the same set-point. No measurable temperature drop across the test specimens was observed. | | |

Table 5B: Specimen Details

| Parameter/Specimen ID | Inv. 3 | Inv. 3 | Comp. B | Comp. B | Inv. 2 | Inv. 2 |
|---|---|---|---|---|---|---|
| Temperature (°C) | 110 | 110 | 110 | 110 | 110 | 110 |
| Fluid Pressure (kPa) ((psig)) | 482.6 (70) | 482.6 (70) | 482.6 (70) | 482.6 (70) | 482.6 (70) | 482.6 (70) |

(continued)

| Parameter/Specimen ID | Inv. 3 | Inv. 3 | Comp. B | Comp. B | Inv. 2 | Inv. 2 |
|---|---|---|---|---|---|---|
| Chlorine (mg/L) | 4.4 | 4.4 | 4.4 | 4.4 | 4.4 | 4.4 |
| pH | 6.8 | 6.8 | 6.8 | 6.8 | 6.8 | 6.8 |
| Test Time (h) | 1,692 | 1,409 | 1,438 | 1,288 | 1,371 | 1,120 |
| Original OD (mm) | 15.96 | 16.03 | 15.93 | 15.91 | 15.87 | 15.88 |
| Original average wall thickness (mm) | 1.92 | 1.96 | 1.92 | 1.95 | 1.97 | 1.96 |
| Original minimum wall thickness (mm) | 1.90 | 1.88 | 1.88 | 1.91 | 1.94 | 1.91 |
| Failure Type | Brittle Slit | Brittle Slit | Brittle Slit | Brittle Slit | Brittle Slit | Brittle Slit |
| Crack Length (mm) | 1.0 | 1.0 | 1.5 | 0.5 | 0.5 | 0.5 |
| Distance From Inlet (mm) | 26 | 148 | 228 | 43 | 30 | 26 |
| Clock Position | 5 | 9 | 2 | 12 | 7 | 6 |
| Initiation Point | Inner Wall | Inner Wall | Inner Wall | Inner Wall | Inner Wall | Inner Wall |
| Fitting Type | Brass | Brass | Brass | Brass | Brass | Brass |

Table 6: Chlorine Resistance Results (110°C)

| Sample | Stress (MPa) ((psi)) | Failure Time** (h) | | |
|---|---|---|---|---|
| | | Replicate | Average (n =2*) | Standard Deviation |
| Comp. B | 1.77 (257) | 1,288 | 1,363 | 106 |
| | 1.81 (262) | 1,438 | | |
| Inv. 2 | 1.76 (255) | 1,120 | 1,246 | 177 |
| | 1.74 (252) | 1,371 | | |
| Inv. 3 | 1.81 (263) | 1,409 | 1,550 | 200 |
| | 1.79 (259) | 1,692 | | |

*Two pipe samples tested.
** Failure due to a loss of fluid at a brittle slit perforation. Minor to extensive degradation and micro-cracking were visually observed on the inner surface of the failed pipe samples.

The pipes formed from the compositions in Table 2 were also examined to determined how the differences in failure times, generated from the chlorine resistance test, impact the extrapolated lifetimes of the pipes at 60°C and 551.6 kPa (80 psig). To determine the impact of the failure times on the extrapolated lifetimes, a complete ASTM F2023 data set (Data Set A) was generated on a similar composition (same as Inventive Example 2, except that 2200 ppm of 1-1330 was used in this composition). The "110°C failure data" from Data Set A was replaced with the failure data of each of the above samples (see Table 6; Inv. 2, Inv. 3 and Comp. B; two failure times per sample), and a regression analysis was performed for each sample (Inv. 2, Inv. 3 and Comp. B). The regression analysis was performed in accordance with ASTM F2023-10 *Standard Test Method for Evaluating the Oxidative Resistance of Crosslinked Polyethylene (PEX) Tubing and Systems to Hot Chlorinated Water.* The regressions were conducted with eight data points (n = 8). See Figure 1. The extrapolations (time to failure) at "60°C, 551.6 kPa (80 psig)" for the SDR 9 pipes were as follows: Comp. B = 42 years, Inv. 2 = 48 years, and Inv. 3 = 36 years.

*Summary of Results*

The performance of a pipe cannot be directly correlated with short-term, single point test results. Therefore, in order to gauge the long term performance of the pipe, a regression analysis based on an accelerated test, similar to the above regression, is needed. The pipe formed from Inventive Example 2, when analyzed with a regression method as described above, achieved a design life expectancy (at 60°C and 551.6 kPa (80 psig)) of 48 years, and thus, out-performed the pipes formed from Comparative B and Inventive 3. The pipe formed from Inventive 3 showed better OIT and chlorine resistance in the short term tests described above. However, the long term performance of the pipe, as established by regression methodology, is the industry standard for rating the pipe in terms of its performance in actual use. Moreover the taste and odor properties of the pipe formed from Inventive Example 2 should be better than those properties of the pipe formed from Inventive Example 3, since Inventive Example 3 contained significantly higher levels of antioxidants, which are known to contribute to taste and odor.

## Claims

**1.** A composition comprising the following:

A) a non-crosslinked ethylene-based polymer;
B) a compound selected from Formula 1:

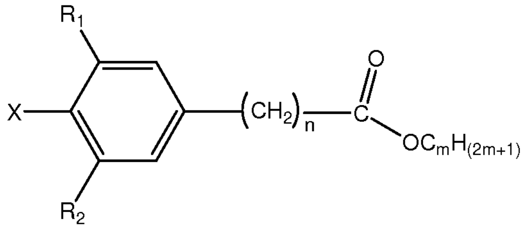

(Formula 1),

wherein R1 and R2 are each independently selected from a C1-C20 alkyl group, X is OH,
n is from 1 to 10, and
m is from 10 to 30,

and wherein this compound is present in an amount greater than, or equal to, 500 ppm, based on the total weight of the composition;
C) a compound selected from Formula 2:

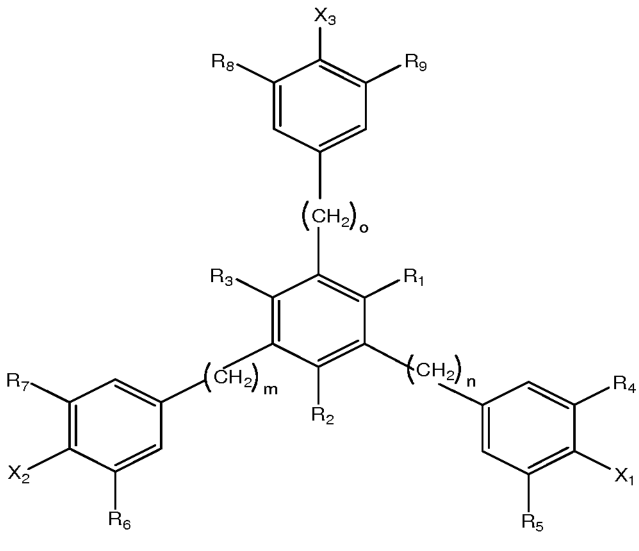

(Formula 2),

wherein R1, R2 and R3 are each independently selected from a C1-C20 alkyl group;
R4, R5, R6, R7, R8 and R9 are each independently selected from a C1-C20 alkyl group,
X1, X2 and X3 are each OH,
n is from 1 to 6,
m is from 1 to 6, and
o is from 1 to 6;

and wherein the weight ratio of Component C to Component B (C/B) is greater than 1; wherein the composition further comprises Component D selected from Formula 3:

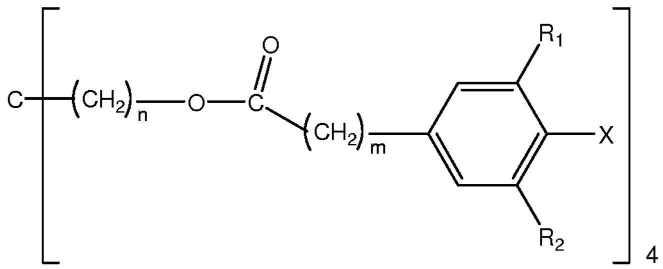

(Formula 3),

wherein R1 and R2 are each independently selected from a C1-C20 alkyl group,
X is OH,
n is from 1 to 10, and
m is from 1 to 10;
wherein the weight ratio of Component D to Component B (D/B) is from 0.5 to 2.5; further comprising Component E selected from Formula 4:

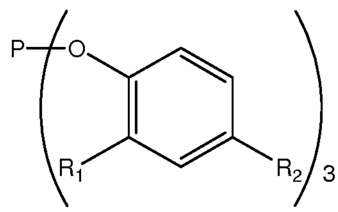

(Formula 4),

wherein R1 and R2 are each independently selected from a C1-C20 alkyl group, wherein the weight ratio of Component E to Component B (E/B) is from 0.5 to 2;
wherein the composition further comprises Component F selected from Formula 5:

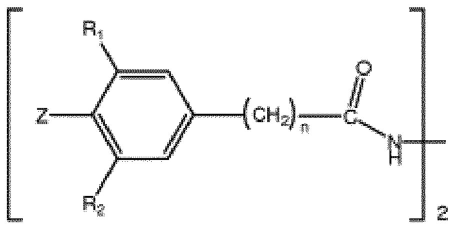

(Formula 5),

wherein R1 and R2 are each independently selected from a C1-C20 alkyl group; Z is OH, and
n is from 1 to 10.

**2.** The composition of Claim 1, wherein the weight ratio of C/B is greater than 1 to 6.

**3.** The composition of any of the previous claims, wherein Component B is present in an amount from 750 to 2500 ppm, based on the weight of the composition.

**4.** The composition of any of the previous claims, wherein Component C is present in an amount from 1000 to 3000 ppm, based on the weight of the composition.

**5.** The composition of Claim 1, wherein Component D is present in an amount from 500 to 2500 ppm, based on the weight of the composition.

**6.** The composition of Claim 1, wherein Component E is present in an amount from 500 to 1500 ppm, based on the weight of the composition.

7. The composition of any of the previous claims, wherein the ethylene-based polymer has a density from 0.930 to 0.960 g/cc, as measured according to the Archimedes displacement method, ASTM D-792-00, Method B, in isopropanol.

8. The composition of any of the previous claims, wherein the ethylene-based polymer has a melt index ($I_2$) from 0.01 to 5 g/10 min, as determined according to ASTM D-1238-04, Condition 190 °C / 2.16 kg.

9. The composition of any of the previous claims, wherein the ethylene-based polymer has a molecular weight distribution from 10 to 30, as determined by conventional GPC.

10. An article comprising at least one component formed from the composition of any of the previous claims.

11. The article of Claim 10, wherein the article is a pipe.

**Patentansprüche**

1. Eine Zusammensetzung, beinhaltend das Folgende:

A) ein nicht vernetztes ethylenbasiertes Polymer;
B) eine Verbindung, ausgewählt aus Formel 1:

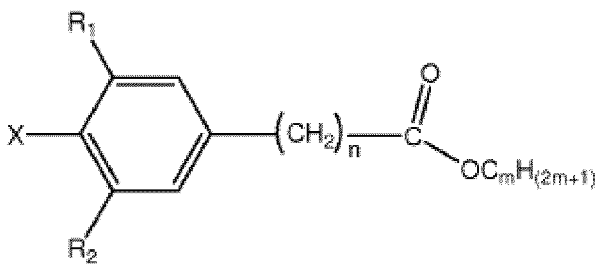

(Formel 1),

wobei R1 und R2 jeweils unabhängig aus einer C1-C20-Alkylgruppe ausgewählt sind,
X OH ist,
n von 1 bis 10 beträgt und
m von 10 bis 30 beträgt,

und wobei diese Verbindung, bezogen auf das Gesamtgewicht der Zusammensetzung, in einer Menge größer als oder gleich 500 ppm vorhanden ist;
C) eine Verbindung, ausgewählt aus Formel 2:

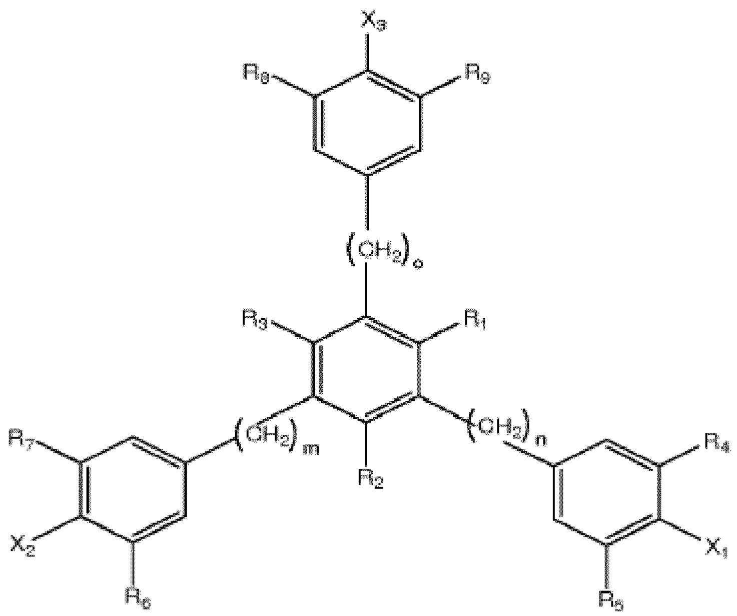

(Formel 2),

wobei R1, R2 und R3 jeweils unabhängig aus einer C1-C20-Alkylgruppe ausgewählt sind;
R4, R5, R6, R7, R8 und R9 jeweils unabhängig aus einer C1-C20-Alkylgruppe ausgewählt sind,
X1, X2 und X3 jeweils OH sind,
n von 1 bis 6 beträgt,
m von 1 bis 6 beträgt und
o von 1 bis 6 beträgt;

und wobei das Gewichtsverhältnis von Bestandteil C zu Bestandteil B (C/B) größer als 1 ist; wobei die Zusammensetzung ferner Bestandteil D beinhaltet, ausgewählt aus Formel 3:

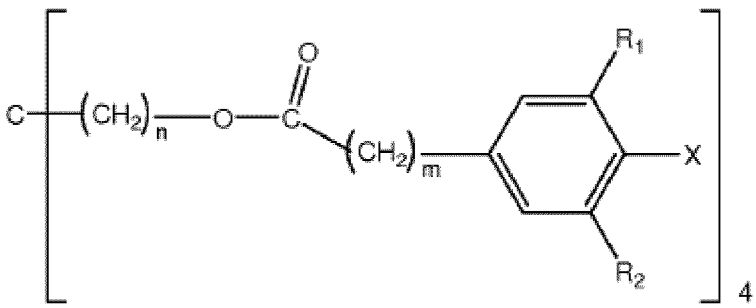

(Formel 3),

wobei R1 und R2 jeweils unabhängig aus einer C1-C20-Alkylgruppe ausgewählt sind,
X OH ist,
n von 1 bis 10 beträgt und
m von 1 bis 10 beträgt;

wobei das Gewichtsverhältnis von Bestandteil D zu Bestandteil B (D/B) von 0,5 bis 2,5 beträgt; ferner beinhaltend Bestandteil E, ausgewählt aus Formel 4:

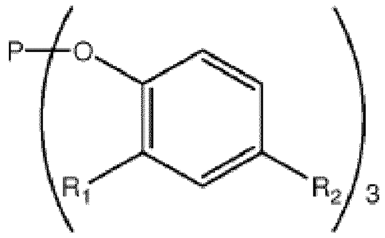

(Formel 4),

wobei R1 und R2 jeweils unabhängig aus einer C1-C20-Alkylgruppe ausgewählt sind, wobei das Gewichtsverhältnis von Bestandteil E zu Bestandteil B (E/B) von 0,5 bis 2 beträgt;
wobei die Zusammensetzung ferner Bestandteil F beinhaltet, ausgewählt aus Formel 5:

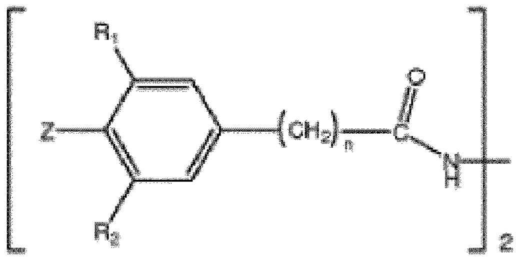

(Formel 5),

wobei R1 und R2 jeweils unabhängig aus einer C1-C20-Alkylgruppe ausgewählt sind; Z OH ist und n von 1 bis 10 beträgt.

2. Zusammensetzung gemäß Anspruch 1, wobei das Gewichtsverhältnis von C/B größer als 1 zu 6 ist.

3. Zusammensetzung gemäß einem der vorhergehenden Ansprüche, wobei Bestandteil B, bezogen auf das Gewicht der Zusammensetzung, in einer Menge von 750 bis 2500 ppm vorhanden ist.

4. Zusammensetzung gemäß einem der vorhergehenden Ansprüche, wobei Bestandteil C, bezogen auf das Gewicht der Zusammensetzung, in einer Menge von 1000 bis 3000 ppm vorhanden ist.

5. Zusammensetzung gemäß Anspruch 1, wobei Bestandteil D, bezogen auf das Gewicht der Zusammensetzung, in einer Menge von 500 bis 2500 ppm vorhanden ist.

6. Zusammensetzung gemäß Anspruch 1, wobei Bestandteil E, bezogen auf das Gewicht der Zusammensetzung, in einer Menge von 500 bis 1500 ppm vorhanden ist.

7. Zusammensetzung gemäß einem der vorhergehenden Ansprüche, wobei das ethylenbasierte Polymer eine Dichte von 0,930 bis 0,960 $g/cm^3$ aufweist, wie nach Archimedes' Verdrängungsverfahren, ASTM D-792-00, Verfahren B, in Isopropanol gemessen.

8. Zusammensetzung gemäß einem der vorhergehenden Ansprüche, wobei das ethylenbasierte Polymer einen Schmelzindex ($I_2$) von 0,01 bis 5 g/10 min aufweist, wie nach ASTM D-1238-04, Bedingung 190 °C/2,16 kg bestimmt.

9. Zusammensetzung gemäß einem der vorhergehenden Ansprüche, wobei das ethylenbasierte Polymer eine Molekulargewichtsverteilung von 10 bis 30 aufweist, wie durch herkömmliche GPC bestimmt.

10. Ein Artikel, beinhaltend mindestens einen aus der Zusammensetzung gemäß einem der vorhergehenden Ansprüche gebildeten Bestandteil.

11. Artikel gemäß Anspruch 10, wobei der Artikel ein Rohr ist.

## Revendications

1. Une composition comprenant ce qui suit :

A) un polymère à base d'éthylène non réticulé ;
B) un composé sélectionné parmi la Formule 1 :

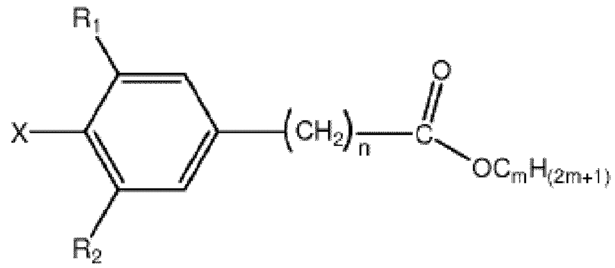

(Formule 1),

où R1 et R2 sont chacun indépendamment sélectionnés parmi un groupe alkyle en C1 à C20,
X est OH,
n vaut de 1 à 10, et
m vaut de 10 à 30,

et où ce composé est présent dans une quantité supérieure, ou égale, à 500 ppm, rapporté au poids total de la composition ;
C) un composé sélectionné parmi la Formule 2 :

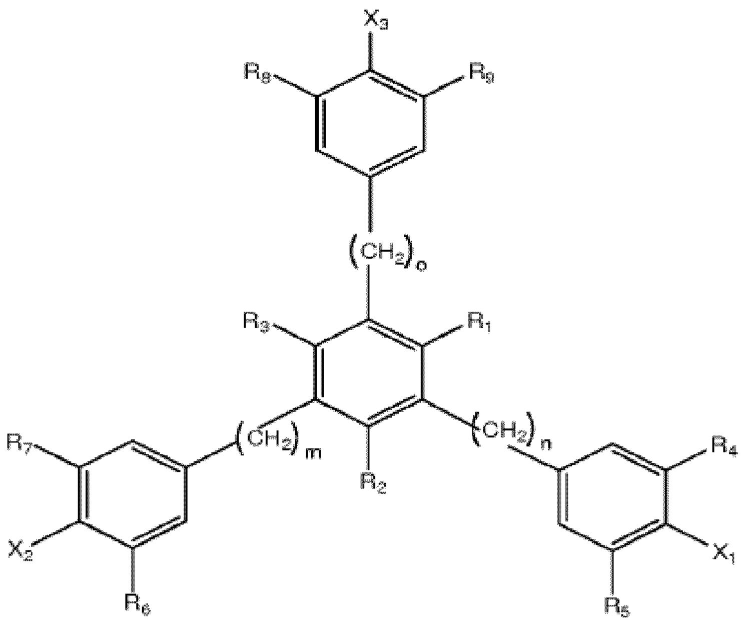

(Formule 2),

où R1, R2 et R3 sont chacun indépendamment sélectionnés parmi un groupe alkyle en C1 à C20 ;
R4, R5, R6, R7, R8 et R9 sont chacun indépendamment sélectionnés parmi un groupe alkyle en C1 à C20,
X1, X2 et X3 sont chacun OH,
n vaut de 1 à 6,
m vaut de 1 à 6, et
o vaut de 1 à 6 ;

et où le rapport en poids du Constituant C au Constituant B (C/B) est supérieur à 1 ; où la composition comprend en sus un Constituant D sélectionné parmi la Formule 3 :

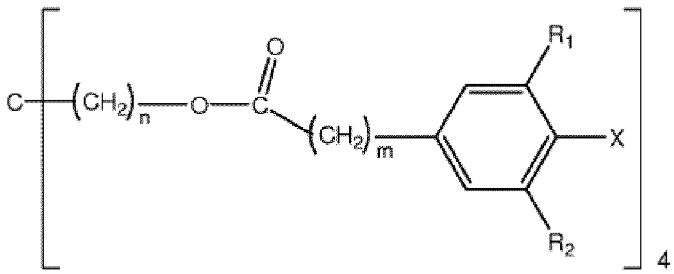

(Formule 3),

où R1 et R2 sont chacun indépendamment sélectionnés parmi un groupe alkyle en C1 à C20,
X est OH,
n vaut de 1 à 10, et
m vaut de 1 à 10 ;

où le rapport en poids du Constituant D au Constituant B (D/B) va de 0,5 à 2,5 ; comprenant en sus un Constituant E sélectionné parmi la Formule 4 :

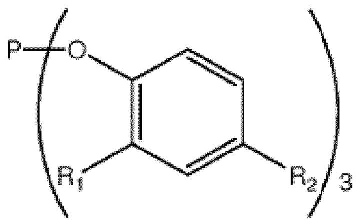

(Formule 4),

où R1 et R2 sont chacun indépendamment sélectionnés parmi un groupe alkyle en C1 à C20,
où le rapport en poids du Constituant E au Constituant B (E/B) va de 0,5 à 2 ;
où la composition comprend en sus un Constituant F sélectionné parmi la Formule 5 :

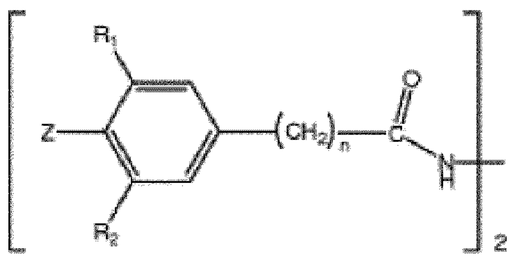

(Formule 5),

où R1 et R2 sont chacun indépendamment sélectionnés parmi un groupe alkyle en C1 à C20;
Z est OH, et
n vaut de 1 à 10.

2. La composition de la revendication 1, où le rapport en poids de C/B est supérieur à de 1 à 6.

3. La composition de n'importe lesquelles des revendications précédentes, où le Constituant B est présent dans une quantité allant de 750 à 2 500 ppm, rapporté au poids de la composition.

4. La composition de n'importe lesquelles des revendications précédentes, où le Constituant C est présent dans une quantité allant de 1 000 à 3 000 ppm, rapporté au poids de la composition.

5. La composition de la revendication 1, où le constituant D est présent dans une quantité allant de 500 à 2 500 ppm, rapporté au poids de la composition.

**6.** La composition de la revendication 1, où le Constituant E est présent dans une quantité allant de 500 à 1 500 ppm, rapporté au poids de la composition.

**7.** La composition de n'importe lesquelles des revendications précédentes, où le polymère à base d'éthylène a une masse volumique allant de 0,930 à 0,960 g/$cm^3$, telle que mesurée selon la méthode de la poussée d'Archimède, ASTM D-792-00, Méthode B, dans de l'isopropanol.

**8.** La composition de n'importe lesquelles des revendications précédentes, où le polymère à base d'éthylène a un indice de fluidité à chaud (I2) allant de 0,01 à 5 g/10 min, tel que déterminé selon l'ASTM D-1238-04, Condition 190 °C / 2,16 kg.

**9.** La composition de n'importe lesquelles des revendications précédentes, où le polymère à base d'éthylène a une distribution des masses moléculaires allant de 10 à 30, telle que déterminée par CPG traditionnelle.

**10.** Un article comprenant au moins un constituant formé à partir de la composition de n'importe lesquelles des revendications précédentes.

**11.** L'article de la revendication 10, où l'article est une conduite.

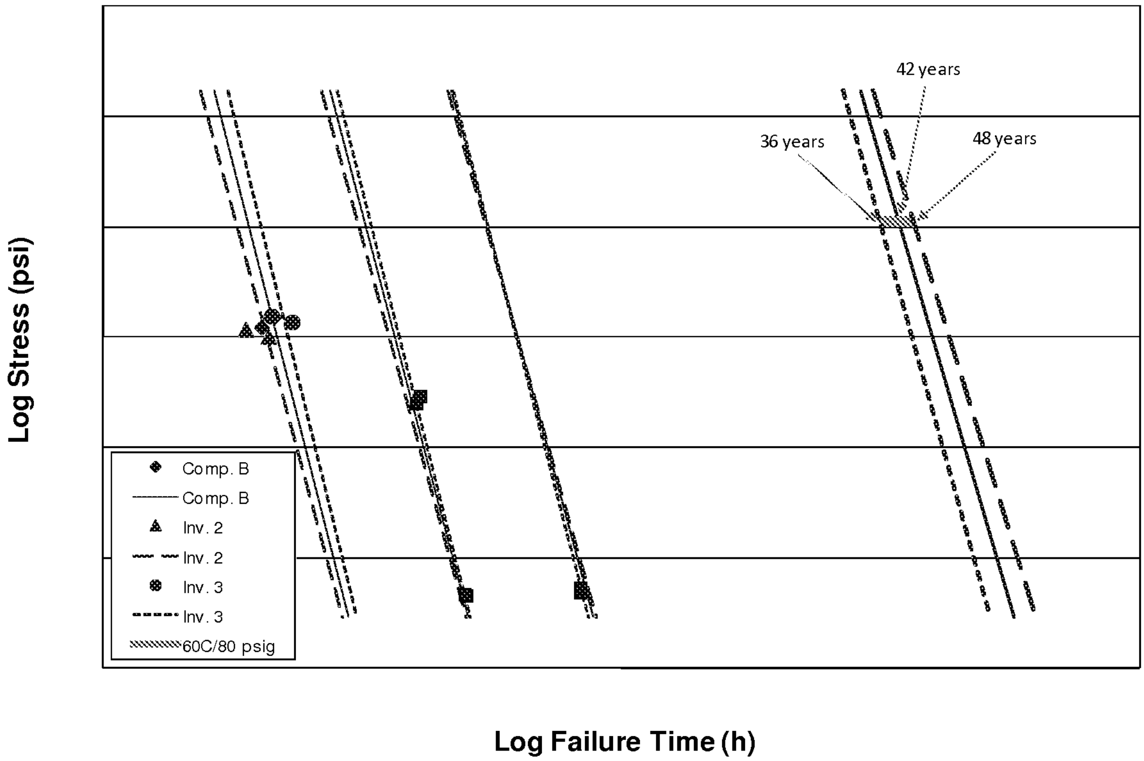
Log Stress (psi)
Log Failure Time (h)
42 years
36 years
48 years
Comp. B
Comp. B
Inv. 2
Inv. 2
Inv. 3
Inv. 3
60C/80 psig

FIGURE 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2005056657 A
- WO 2008153586 A
- WO 2008051824 A
- WO 2003020821 A
- WO 2008141026 A
- WO 2006124226 A
- US 7250473 B
- US 7086421 B
- US 20080017268 A
- JP 2217682 A
- JP 1030988 A
- JP 2007031699 A


### Non-patent literature cited in the description


- *CHEMICAL ABSTRACTS,* 002082-79-3
- *CHEMICAL ABSTRACTS,* 32687-78-8
- *CHEMICAL ABSTRACTS,* 2767-62-6
- *CHEMICAL ABSTRACTS,* 040601-76
- *CHEMICAL ABSTRACTS,* 36443-68-2
- *CHEMICAL ABSTRACTS,* 35074-77-2
- *CHEMICAL ABSTRACTS,* 41484-35-9
- **WILLIAMS ; WARD.** *J. Polym. Sci., Polym. Let.,* 1968, vol. 6, 621
- **MOUREY ; BALKE.** Chromatography Polym. 1992
- **BALKE ; THITIRATSAKUL ; LEW ; CHEUNG ; MOUREY.** Chromatography Polym. 1992
- **ZIMM, B.H.** *J.Chem. Phys.,* 1948, vol. 16, 1099
- **KRATOCHVIL, P.** Classical Light Scattering from Polymer Solutions. Elsevier, 1987
- **YAU ; GILLESPIE.** *Polymer,* 2001, vol. 42, 8947-8958